Europäisches Patentamt

European Patent Office

Office européen des brevets

(19)

(11) Publication number: **0 205 207 B1**

(12) **EUROPEAN PATENT SPECIFICATION**

(45) Date of publication of the patent specification:
01.08.90

(51) Int. Cl.⁵: **G11B 15/12**, G11B 5/53,
G11B 15/61

(21) Application number: 86200939.6

(22) Date of filing: 30.05.86

(54) Device for magnetically recording and/or reading signals.

(30) Priority: 03.06.85 NL 8501583

(43) Date of publication of application:
17.12.86 Bulletin 86/51

(45) Publication of the grant of the patent:
01.08.90 Bulletin 90/31

(84) Designated Contracting States:
CH DE FR GB IT LI

(56) References cited:
EP-A- 0 023 067
FR-A- 2 365 853
US-A- 3 235 670
US-A- 3 389 217
US-A- 3 995 317

PATENTS ABSTRACTS OF JAPAN, vol. 3,
no. 96 (E-130), 15th August 1979, page 40 E 130; JP - A
- 54 73 616
PATENTS ABSTRACTS OF JAPAN, vol. 2, no. 1, 11th
January 1979, page 133 E 82; JP - A - 53 128 321
PATENTS ABSTRACTS OF JAPAN, vol. 8,
no. 202 (P-300)[1639], 14th September 1984; JP - A
- 59 84 330
PATENTS ABSTRACTS OF JAPAN, vol. 9,
no. 68 (P-344)[1791], 28th March 1985; JP - A - 59 201 214

(73) Proprietor: N.V. Philips' Gloeilampenfabrieken,
Groenewoudseweg 1, NL-5621 BA Eindhoven(NL)

(72) Inventor: Muller, Johannes Cornelius Antonius, c/o INT.
OCTROOIBUREAU B.V. Prof. Holstlaan 6, NL-5656 AA
Eindhoven(NL)

(74) Representative: Smit, Frederik Jan et al,
INTERNATIONAAL OCTROOIBUREAU B.V. Prof.
Holstlaan 6, NL-5656 AA Eindhoven(NL)

(56) References cited: (continuation)
PATENTS ABSTRACTS OF JAPAN, vol. 3,
no. 47 (E-105), 20th April 1979, page 93 E 105; JP - A
- 54 24 608

ACTORUM AG

## Description

The invention relates to a device for magnetically recording and/or reading signals in signal tracks on a magnetic tape, comprising a drive shaft which is rotatable about an axis of rotation, a first means, which is secured to the drive shaft and which carries at least one magnetic head which is rotatable with said first means about the axis of rotation in a circular path, and a mounting carrying a second means comprising an external cylindrical guide surface whose cylinder axis extends parallel to the axis of rotation, for guiding the magnetic tape past the magnetic head, an actuating device by means of which one of the said means is pivotable relative to the other means between a stand-by position, in which the magnetic head is not in contact with the magnetic tape which is guided by the guide surface, and a playing position, in which the rotating magnetic head is in contact with the magnetic tape which is guided by the guide surface, which actuating device cooperates with a positioning means for accurately positioning the movable means in at least said playing position.

A device of the type defined in the opening paragraph is known from FR-A-2365853. In this known device the first means may be a head support carrying the magnetic head. The magnetic head is situated in the gap between a lower drum and an upper drum of the second means, both drums forming the guide surface for the magnetic tape. In this known device the magnetic head is movable relative to the magnetic tape in the width direction of the tape between a playing position and a stand-by position by pivoting the head support of the guide surface. In the playing position the magnetic tape is wrapped helically around the guide surface through a specific angle and the magnetic tape is movable past the rotating magnetic head for the purpose of recording or reading signals on the tape. In the stand-by position the magnetic head is situated below the lower edge of the magnetic tape and is clear of said tape as a result of said pivotal movement, in order to preclude additional wear to the magnetic head and possibly to the magnetic tape in the stand-by position. In the stand-by position the magnetic head occupies a fixed position relative to that part of the guide surface where the tape is guided over this guide surface at a relatively high point, as a result of the helical path of the tape. Thus, a rotation of the magnetic-head support is not possible in the stand-by position. However, it is desirable to maintain the rotation of the head support in the stand-by mode of the device in order to avoid a waiting time necessary to bring the magnetic head up to speed when changing over from the stand-by mode to the play-mode.

Steps to ensure that the rotating magnetic head cannot come into contact with the magnetic tape in the stand-by mode are known from US-A 3,076,060, which describes an apparatus for recording and reading, for example, video signals, which apparatus comprises a head disc which is rotatable about a fixed axis and which carries a magnetic head by means of a radially movable carrier arm. The carrier arm is actuated by an actuating device which comprises inter alia is solenoid and a lever and latching mechanism comprising a plurality of resilient elements. In the stand-by mode the lever and the latching mechanism ensure that the carrier arm of the magnetic head is brought into and maintained in a position within the circumference of the head disc, so that the rotating magnetic head cannot contact the magnetic tape. In the playing mode, in which the carrier arm is unlatched by energising the solenoid, the carrier arm with the magnetic head is moved outwards and subsequently pressed against the magnetic tape under the influence of the the centrifugal forces and spring forces. A disadvantage of these steps is, in particular, the intricate construction necessary to move the magnetic head away from and towards the magnetic tape and keep it in the relevant positions. Such a construction leads to expensive and vulnerable devices for recording and/or reading signals and is therefore not attractive for use in consumer products such as video recorders.

It is the object of the present invention to provide a device of the type defined in the opening paragraph, which by means of simple yet reliable steps enables the position of the magnetic head and the magnetic tape on the guide surface relative to each other to be changed rapidly and exactly between a situation in which the magnetic head rotates without being in contact with the magnetic tape and a situation in which the rotating magnetic head is into contact with the magnetic tape for recording or reading signals in signal tracks on the magnetic tape.

To this end the invention is characterized in that the pivotal axis about which the actuating device pivots the movable means between the stand-by position and the playing position is spaced from and extends substantially parallel to the axis of rotation of the drive shaft, said pivotal axis being so positioned relative to the axis of rotation and the guide surface that in the stand-by position the magnetic head as it rotates does not contact the magnetic tape.

An advantage of the present invention is that as a result of the location of the pivotal axis about which the movable means is pivotable the actuating device is capable of simply and effectively pivoting said means between the stand-by position and the playing position, resulting in a displacement of the magnetic head relative to the tape in a direction transverse to the axis of rotation. This displacement allows the the magnetic head to rotate without being in contact with the tape in the stand-by mode. The movable means may be the first means carrying the magnetic head or the second means comprising the guide surface. In this way the invention enables rapid switching from the stand-by mode to the play mode and as a result of its inexpensive and compact construction the device in accordance with the invention is very suitable for use in electronic cameras, film equipment and analog and digital data-processing equipment.

In order to ensure a satisfactory operation of the device in accordance with the invention the magnetic tape should, in principle, be arranged around the cylindrical guide surface of the second means over a wrapping angle which is smaller than 180°. Very good results are obtained with a wrapping angle of approximately 90°.

A preferred embodiment of the invention is characterized in that the movable means is supported by an elastic element which constitutes an integral hinge whose hinge axis coincides with said pivotal axis. Such a construction has the advantage that the desired movement of the movable means can be very accurate, so that for the relative movement of the magnetic head with respect to the tape between the stand-by position and the playing position only a small displacement is required, which obviously has a favourable effect on the time necessary for switching between the stand-by position and the playing position.

In this respect another preferred embodiment is characterized in that under the influence of the elasticity of the integral hinge the movable means is pivoted from a first position to a second position and is urged against the positioning means in the second position. Thus, after the actuating device has been switched off the integral hinge automatically pivots and positions the movable means from, for example, the playing position to the stand-by position.

Yet another preferred embodiment of the invention is characterized in that the drive shaft carrying the first means is journalled in a bearing sleeve which is coaxial with the axis of rotation and which is connected to the mounting by the elastic element for moving the first means in a direction transverse to the axis of rotation between said playing position and said stand-by position. In this embodiment the first means, which generally comprises a head disc or a cylindrical head drum carrying the magnetic head, is movable relative to the second means, which generally comprises a one-part or two-part stationary drum.

In this respect another preferred embodiment is characterized in that the elastic element is integral with the second means and the bearing sleeve. Such a construction can be realised at low cost.

A further preferred embodiment is characterized in that the actuating device comprises an electro-magnetic or piezo-electric actuator for pressing the bearing sleeve against a stop of the positioning means in the playing position or the stand-by position. Such an actuating device responds rapidly and guarantees an accurately reproducible and stable position of the bearing sleeve and hence of the rotating magnetic head in the playing position and in the stand-by position.

Still another preferred embodiment of the invention is characterized in that the second means takes the form of a semi-cylindrical surface which is secured to the mounting by means of the elastic hinge in order to pivot said semi-cylindrical surface about the pivotal axis. In this embodiment the second means is arranged so as to be movable, so that the guide surface is movable relative to the first means carrying the magnetic head.

Embodiments of the invention will now be described in more detail, by way of example, with reference to the accompanying drawings, in which:

Fig. 1 is a perspective view of a magnetic-tape apparatus employing a device in accordance with a first embodiment of the invention,

Fig. 2 is a part-sectional perspective view of the first embodiment, comprising a movable head disc, which is shown in the playing position,

Fig. 3 is a part-sectional perspective view of the first embodiment, in which the head disc is shown in the stand-by position,

Fig. 4 is an underneath view of the first embodiment, in which the head disc is shown in the stand-by position,

Fig. 5 is a schematic plan view of a device in accordance with a second embodiment of the invention, and

Fig. 6 is a side view of the second embodiment.

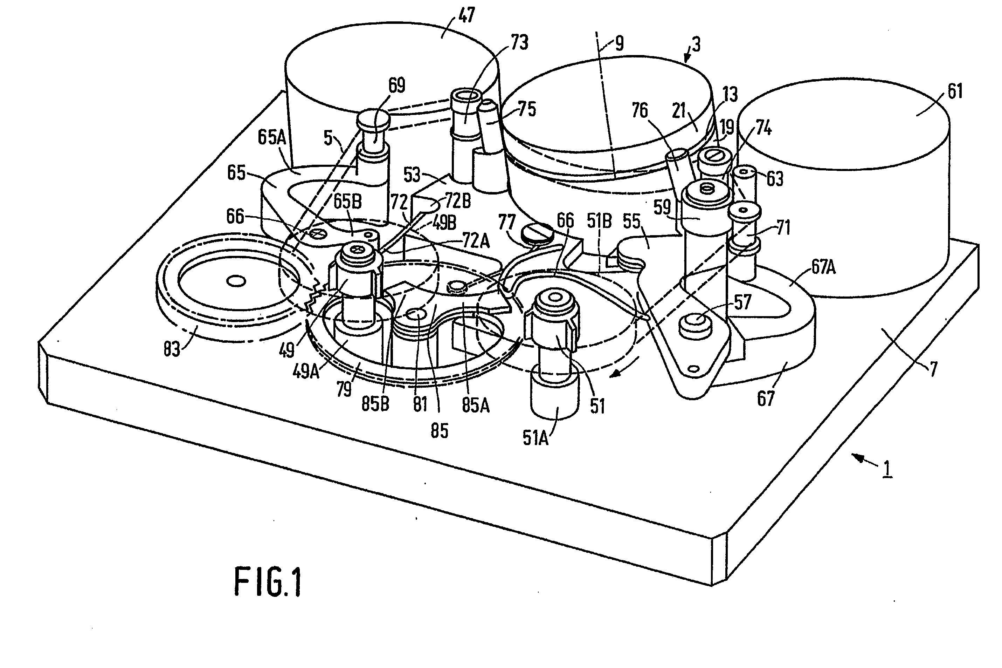

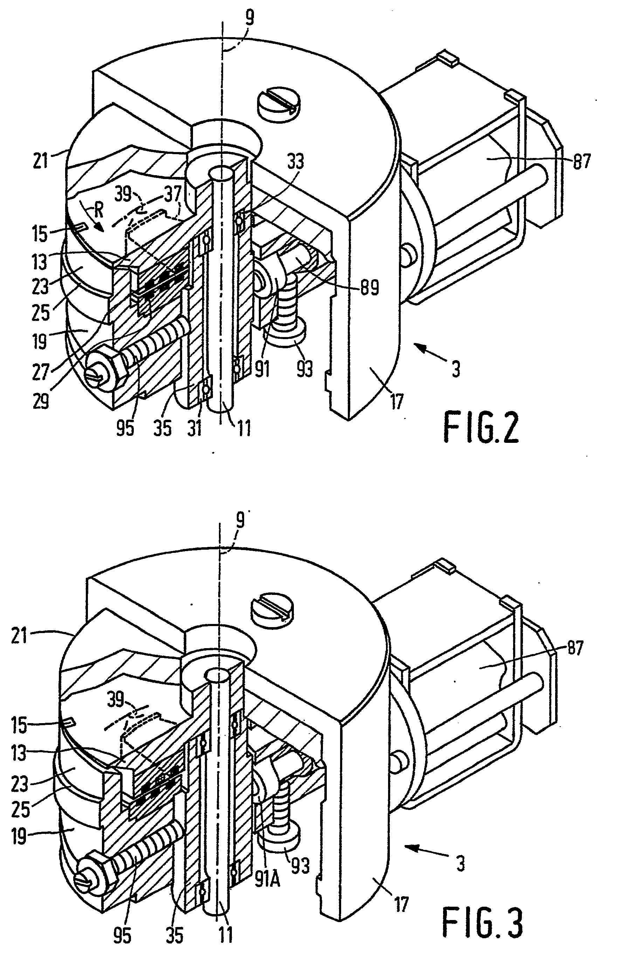

The magnetic-tape apparatus shown in Fig. 1 comprises a device 3 in accordance with the invention for magnetically recording and reading digital signals on/from a magnetic tape 5. The magnetic-tape apparatus 1 comprises a deck plate 7 on which the device 3 is mounted. The device 3, which is shown in more detail in Figs. 2 to 4, comprises a drive shaft 11 which is rotatable about an axis of rotation 9 and to which a first means comprising a head disc 13 is secured. The head disc 13 carries two diametrically opposed magnetic heads 15, of which only one head is shown in the drawing. The device 3 further comprises a mounting 17 by means of which the device 3 is secured to the deck plate 7 and which carries a second means comprising a lower drum 19 and an upper drum 21. Between the lower drum 19 and the upper drum 21 a gap is formed in which the magnetic heads 15 can rotate. The external cylindrical surfaces of the lower and upper drums form a cylindrical guide surface 23 on which the magnetic tape 5 can be guided along a helical path for the recording or reading of oblique signal tracks on the magnetic tape 5 by means of the magnetic heads 15 during rotation of the head disc 13. A helical guide face 25 on the lower drum 19 ensures that the magnetic tape is supported correctly. Such a method of guiding the magnetic tape and such a method of recording and reading the magnetic tape are customary in every magnetic-tape video recorder and are therefore not described in more detail.

Between the head disc 13 and the lower drum 19 internal transformer means are arranged, which means comprise a rotatable transformer ring 27, which is concentric with the axis of rotation and which is secured to the rotable head disc 13, and a stationary transformer ring 29, which is secured to the lower drum 19 and which is disposed opposite the rotatable transformer ring in such a way that a narrow axial air gap is formed. The transformer rings 27 and 29 serve for the contactless transmission of signals to and form the rotating magnetic heads via the air gap between these rings.

The drive shaft 11 carrying the head disc 13 with the magnetic heads 15 is journalled in a bearing sleeve 35 by means of two ball-bearings 31 and 33. The bearing sleeve 35 is coaxial with the axis of rotation 9 and is pivotally connected to the lower drum 19 and the upper drum 21, which are made of, for example, aluminium, by a connecting member 37 which extends between the bearing sleeve 35 and the lower drum 19 and the upper drum 21 and which is tangentially constricted at the side near the lower and upper drums to form a web-like elastic element, constituted by an integral hinge 39 having a substantially rectangular cross-section and having a longitudinal axis which extends parallel to the axis of rotation 9. Alternatively, the integral hinge 39 may be made of a plastics.

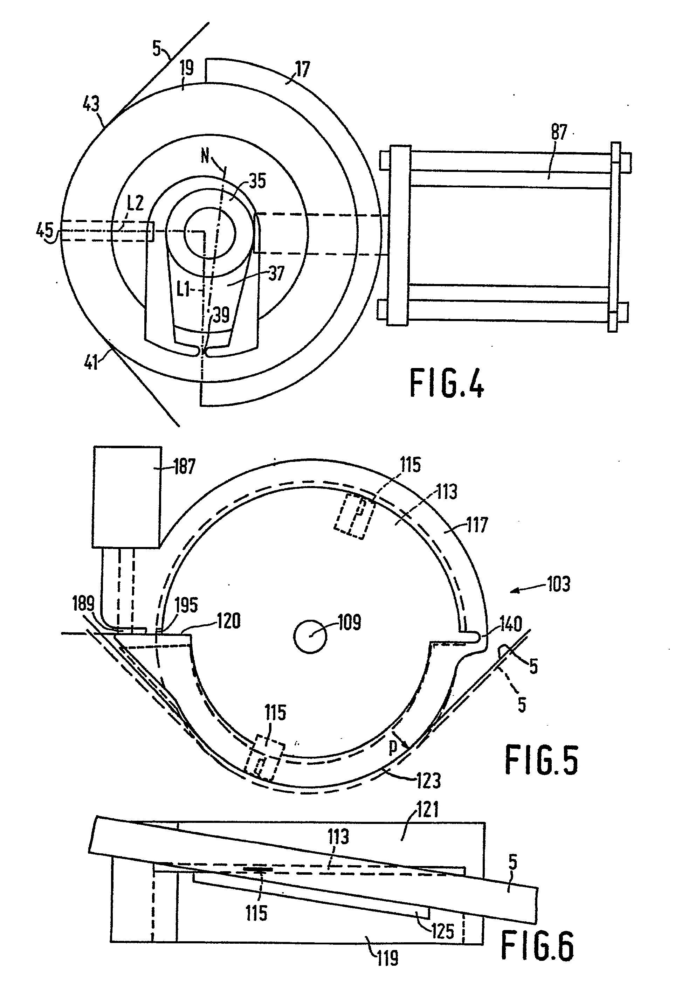

In the present embodiment, as can be seen from Fig. 4, the magnetic tape 5 is guided on the guide surface 23 through 90 degrees of arc between a tape-guide entry point 41 and a tape-guide exit point 43. The integral hinge 39 is so positioned relative to the guide surface 23 that a line L1 normal to a plane tangential to the cylindrical surface of the lower drum 19 or the upper drum 21 and extending through the integral hinge 39 is perpendicular to a line L2 normal to a plane tangential to the guide surface 23 at a tape-guide point 45 which is situated halfway between the tape-guide entry point 41 and the tape-guide exit point 43.

As shown in Fig. 1, the axis of rotation 9 of the drive shaft 11 extends obliquely to the deck plate 7. The drive shaft and with it the head disc 13 are driven by means of a drive motor 47 which is arranged adjacent the device 3. The normal direction of rotation of the head disc 13 is indicated by the arrow R.

Two winding spindles 49 and 51 are arranged above the deck plate 7 at a distance from each other. The winding spindles 49 and 51 are rotatable in journals 49A and 51A which are secured to the deck plate 7. The winding spindles 49 and 51, which have axes of rotation that extend perpendicularly to the deck plate 7 engage in reels 49B and 51B, between which the magnetic tape 5 can be transported. A sliding plate 53 is rectilinearly slidable on the upper side of the deck plate 7 between the position shown in Fig. 1, which is the normal operating position of the sliding plate 53 and corresponds to the play mode of the magnetic-tape apparatus, and an initial inoperative position, which is situated farther from the device 3.

A pressure-roller lever 55 is mounted on the upper side of the deck plate 7 for pivotal movement about a pivot axis 57. At one end the pressure roller lever 55 carries a pressure roller 59 which is adapted to cooperate with a capstan 63, which is journalled in the deck plate 7 and which can be driven by an electric motor 61. The deck plate 7 further carries two pivotal arms 66 and 67, the arm 65 being pivotable about a pivot axis 66 and the pivot arm 67 being pivotable together with the pressure-roller lever 55 about the pivot axis 57. Each of the pivotal arms 65 and 67 comprises a first limb, 65A and 67A respectively, which at its free end carries a tape guide 69 and 71, respectively, having a cylindrical guide surface. Further, the pivotal arms 65 and 67 each comprise a second limb having a free end for cooperation with the sliding plate 53. For this purpose the plate 53 is provided with guide edges on opposite sides. In the drawing only one of the two second limbs, designated 65B, and one of the guide edges, designated 72, are visible. In the position shown, which is the operative position of the plate 53, the ends of the second limbs bear against elastic end portions 72A of the guide edges 72, which end portions are bent slightly outwards. This ensures a correct and stable position of the tape guides 69 and 71. During the movement of the sliding plate 53 to the inoperative position the ends of the second limbs move along the guide edges 72 until the sliding plate 53 reaches this position. The end portions of the second limbs are then stably retained in the cavities 72B in the guide edges 72.

For guiding the magnetic tape 5 around the device 3 there are provide tape guides 73, 74, 75 and 76, which are mounted on the sliding plate 53. By means of a blade spring 77 the sliding plate 53 is coupled to a servo wheel 79 which is mounted on a shaft 81 in the deck plate 7. A drive unit, not shown, is coupled to the servo-wheel 79 via a gear-wheel 83 and provides the displacement of the sliding plate 53. A bell-crank lever 85 mounted on the servo wheel 79 cooperates with a wire spring 66 to move and position the pressure roller 59. In the position shown, in which the sliding plate 53 is positioned acurately relative to the device 3, a first end 85A of the bell-crank lever 85 presses against the wire spring 66, so that this spring exerts a force on the pressure-roller lever 55 and the pressure roller 59 is thus pressed against the capstan 63 under spring force. By rotation of the servo-wheel 79 a second end 85B of the bell-crank lever 85 is positioned against the wire spring 66. For a more detailed description of the construction and operation of the sliding plate 53 and the elements which are coupled thereto directly or indirectly, reference is made to the non-prepublished European Patent Application EP-A 197 602 herewith incorporated by reference). However, the above description of the sliding plate 53 and the parts cooperating therewith is assumed to be adequate for a correct understanding of the invention.

The operation of the device 3 in accordance with the invention will now be described in more detail with reference to Figs. 2, 3 and 4. For the sake of clarity no magnetic tape is shown in Figs. 2 and 3. In Fig. 2 the device 3 is in a position which is referred to hereinafter as the playing position of the head disc 13, in which position the rotating magnetic heads can record or read information on the magnetic tape. In the playing position the axis of rotation 9 of the drive shaft 11 coincides with the common central axis of the stationary lower and upper drums 19 and 21. An actuating device comprising an electromagnetic actuator 87 which is secured to the deck plate 7, urges in the position shown in Fig. 2 the pivotable bearing sleeve 35 against a positioning element comprising an adjustable stop 95. The actuating device 87 comprises a locating pin 89 which belongs to the positioning means and which is movable axially into and out of the actuating device in a guide sleeve 91. In the playing position of the head disc 13 the actuating device 87 is energised and presses the bearing sleeve 35 against the stop 95 so that the sleeve is clamped between the stop 95 and the extended locating pin 89, which in the present embodiment are situated diametrically opposite each other on the normal L2 through the central tape-guide point 45.

If the electromagnetic actuating device 87 is switched off, which is effected, for example, when the recording or reading process of the magnetic tape is terminated or when it is required to have a pause in the recording or reading process, the pin 89 is automatically withdrawn by the actuating device and the bearing sleeve 35, together with the first means comprising the drive shaft 11, pivots the disc 13 with the magnetic heads 15 about the integral hinge 39 from the stop 95 against a stop edge 91A of the guide sleeve 91, which stop edge is adjustable by means of a set screw 93. The stop edge 91A also form part of the positioning means. Thus, the first means is pivotally movable. In this respect it is important that the longitudinal axis of the integral hinge 39 is situated at a distance from and extends substantially parallel to the axis of rotation 9 and occupies such a position relative to the guide surface 23 that a substantially radial movement of the first means is obtained during the movement to the stand-by position. This situation is illustrated in Figs. 3 and 4 and is referred to hereinafter at the stand-by position of the head disc 13. In the stand-by position the magnetic tape 5 remains on the guide surface 23, as is shown in Fig. 1, and the magnetic heads 15 can continue to rotate without causing any wear of the magnetic heads 15 and/or the magnetic tape 5, because the magnetic heads 5 cannot now contact the magnetic tape as a result of the radial displacement.

In the present embodiment the integral hinge 39 has a neutral position which is indicated by the dash-dot line N in Fig. 4. In the stand-by position of the head disc the bearing sleeve 35 is pressed against the stop edge 91A of the guide sleeve 91 (Fig. 3) by the integral hinge 39 as a result of the elasticity of this hinge. An additional advantage of the above construction of the integral hinge 39 is that the pivotal movement of the bearing sleeve 35 on the integral hinge 39 from the playing position of the head disc to the stand-by position of this disc is initiated automatically by the internal hinge 39 itself, so that no additional provisions have to be made for this.

An alternative embodiment of the device in accordance with the invention is shown schematically in Figs. 5 and 6. Wherever possible, the same terminology is used in the description of this embodiment as in the description of the preceding embodiment. The device 103 comprises a mounting 117 and a head disc 113 which carries two magnetic heads 115 and which is rotatable about an axis of rotation 109 which in this embodiment is fixed relative to the mounting 117. In this embodiment the head disc 113 together with the magnetic heads 115 constitute the first means, whilst the second means is constituted by the cylindrical lower and upper drums 119 and 121, which are connected to the mounting 117 by means of an elastic element 140 constituted by an integral hinge and which form a guide surface 123 for a magnetic tape. A helical guide 125 for the lower edge of the tape is provided on that lower drum 119. The elastic element 140 is constituted by a narrow web-like wall portion of small thickness, which extends parallel to the axis of rotation 109. Diametrically opposite elastic element 140 the mounting 117 carries a stop 195 which forms part of the positioning means and against which in the position shown in Fig. 5 a radially directed end portion 120 of the lower and upper drum 119 and 121 is urged as a result of the elasticity of the elastic element 140. The position intended here is the playing position of the lower and upper drum 119 and 121, in which position the rotating magnetic heads 115 can record or read signals on the magnetic tape 5 which is guided on the guide surface 123. If recording or reading is to be interrupted temporarily, without stopping the magnetic heads 115, the lower and upper drums 119 and 121 with the guide surface 123 and the magnetic tape 5 can be pivoted on the elastic element 140 by means of the device 103 in accordance with the invention in a substantially radial direction, as indicated by the arrow P, into a stand-by position in which the rotating magnetic heads 115 are not in contact with the magnetic tape 5 to preclude unnecessary wear of the magnetic heads 115 and/or the magnetic tape 5. The stand-by-position of the upper and lower drums 119 and 121 is indicated by a broken line in Fig. 5. An energised actuating device comprising an electromagnetic actuator 187 and an actuating pin 189 which forms part of the positioning means disc-laces that the lower and upper drums 119 and 121 into and maintains them in the stand-by position, the actuating pin pressing against the end portion 120 of the lower and upper drums 119 and 121. The elastic element 140 produces a certain counteracting elastic force, so that a stable positioning is possible. If the electromagnetic actuating device is switched off, the lower and upper drums 119 and 121 are pivoted back into the playing position in a direction opposite to that indicated by the arrow P under the influence of the elasticity of the elastic element 140, in which position the elastic element ensures a stable abutment against the stop 195. It is to be noted that after switching off in an alternative manner, not shown, the elastic element 140, in the same way as the element 39 in the first embodiment, automatically pivots the lower and upper drums 119 and 121 from the playing position to the stand-by position. In this situation the actuating pin 189, after energisation of the actuating device, returns the drums to the playing position. A similar reversal is also possible in an embodiment in which as an alternative the element 39 automatically pivots the first means from the stand-by to the playing position after switching off of the actuating means.

**Claims**

1. A device (3) for magnetically recording and/or reading signals in signal tracks on a magnetic tape, comprising a drive shaft (11) which is rotatable about an axis of rotation (9; 109), a first means (13; 113), which is secured to the drive shaft (11) and which carries at least one magnetic head (15; 115) which is rotatable with said first means (13; 113) about the axis of rotation in a circular path, and a mounting (17) carrying a second means (19, 21; 119, 121) comprising an external cylindrical guide surface (23; 123) whose cylinder axis extends parallel to the axis of rotation, for guiding the magnetic tape past the magnetic head (15; 115), an actuating device (87, 187) by means of which one of the said means (13; 119; 121) is pivotable relative to the other means (19; 21; 113) between a stand-by position, in which the magnetic head (15; 115) is not in contact with the magnetic tape which is guided by the guide surface (23; 123), and a playing position, in which the rotating magnetic head is in contact with the magnetic tape which is guided by the guide surface, which actuating device (87, 187) cooperates with a positioning means (95) for accurately positioning the pivotable means (13; 119; 121) in at least said playing position, characterized in that the pivotal axis about which the actuating device (87, 187) pivots the pivotable means (13; 119; 121) between the stand-by position and the playing position is spaced from and extends substantially parallel to the axis of rotation (9; 109) of the drive shaft (11), said pivotal axis being so positioned relative to the axis of rotation (9; 109) and the guide surface (23; 123) that in the stand-by position the magnetic head (15; 115) as it rotates does not contact the magnetic tape.

2. A device as claimed in Claim 1, characterized in that the pivotable means (13; 119; 121) is supported by an elastic element (39; 140) which constitutes an integral hinge whose hinge axis coincides with said pivotal axis.

3. A device as claimed in Claim 2, characterized in that under the influence of the elasticity of the integral hinge the pivotable means (13; 119, 121) is pivoted from a first position to a second position and is urged against the positioning means (95) in the second position.

4. A device as claimed in Claim 2 or 3, characterized in that the drive shaft (11) carrying the first means (13) is journalled in a bearing sleeve (35) which is coaxial with the axis of rotation (9) and which is connected to the mounting by the elastic element (39) for moving the first means (13) in a direction transverse to the axis of rotation (9) between said playing position and said stand-by position.

5. A device as claimed in Claim 4, characterized in that the elastic element (39) is integral with the second means (19, 21) and the bearing sleeve (35).

6. A device as claimed in Claim 4 or 5, characterized in that the actuating device (87) comprises an electro-magnetic or piezo-electric actuator for pressing the bearing sleeve (35) against a stop (95) of the positioning means in the playing position or the stand-by position.

7. A device as claimed in Claim 1, 2 or 3, characterized in that the second means (19, 21; 119, 121) takes the form of a semi-cylindrical surface (23; 123) which is secured to the mounting by means of the elastic hinge (39; 140) in order to pivot said semicylindrical surface (23; 123) about the pivotal axis.

8. A device as claimed in Claim 7, characterized in that the actuating device (87; 187) comprises an electromagnetic or piezo-electric actuator for pressing said cylindrical surface (23; 123) against a stop (95) of the positioning means in the playing position or the stand-by position.

## Patentansprüche

1. Anordnung (3) zur magnetischen Aufzeichnung und/oder Wiedergabe von Signalen in Signalspuren auf einem Magnetband, mit einer um eine Drehungsachse (9; 109) drehbaren Antriebsspindel (11), einem auf der Antriebsspindel (11) befestigten ersten Mittel (13; 113) mit mindestens einem Magnetkopf (15; 115), der mit dem genannten ersten Mittel (13; 113) in einer kreisförmigen Bahn um die Drehungsachse drehbar ist, und mit einem Gestell (17) mit einem zweiten Mittel (19, 21; 119, 121), das mit einer äußeren zylinderförmigen Führungsfläche (23; 123) versehen ist, wobei die Zylinderachse sich parallel zur Drehungsachse erstreckt, zum Führen des Magnetbandes an dem Magnetkopf (15; 115) entlang, weiterhin mit einer Bedienungsvorrichtung (87; 187), mit der eines der genannten Mittel (13; 119; 121) gegenüber den anderen Mitteln (19; 21; 113) schwenkbar ist, und zwar zwischen einer Bereitschaftslage, in der der Magnetkopf (15; 115) das von der Führungsfläche (23; 113) geführte Magnetband nicht berührt, und einer Spiellage, in der der drehende Magnetkopf sich mit dem Magnetband berührt, das durch die Führungsfläche geführt wird, wobei die Bedienungsvorrichtung (87, 187) mit einem Positioniermittel (95) zum genauen Positionieren des schwenkbaren Mittels (13; 119; 121) in wenigstens der Spiellage zusammenarbeitet, dadurch gekennzeichnet, daß die Schwenkachse, um die die Bedienungsvorrichtung (87, 187) zwischen der Bereitschaftslage und der Spiellage das schwenkbare Mittel (13; 119; 121) schwenkt, im Abstand von der Drehungsachse (9; 109) der Antriebsspindel (11) liegt und sich im wesentlichen parallel zu dieser Drehungsachse erstreckt, wobei die Schwenkachse in bezug auf die Drehungsachse (9; 109) und auf die Führungsfläche (23; 123) derart angeordnet ist, daß in der Bereitschaftslage sich der Magnetkopf (15; 115) beim Drehen nicht mit dem Magnetband berührt.

2. Anordnung nach Anspruch 1, dadurch gekennzeichnet, daß das schwenkbare Mittel (13; 119; 121) von einem federnden Element (39; 140) getragen wird, das ein Integralscharnier bildet, dessen Scharnierachse mit der Schwenkachse zusammenfällt.

3. Anordnung nach Anspruch 2, dadurch gekennzeichnet, daß unter dem Einfluß der Federkraft des Integralscharniers das schwenkbare Mittel (13; 119; 121) aus einer ersten Lage heraus in eine zweite Lage eingeschwenkt und an das Positioniermittel (95) in der zweiten Lage gedrückt wird.

4. Anordnung nach Anspruch 2 oder 3, dadurch gekennzeichnet, daß die Antriebsspindel (11), die das erste Mittel (13) trägt, in einer Lagerhülse (35) gelagert ist, die zur Drehungsachse (9) koaxial verläuft und durch das federnde Element (39) mit dem Gestell verbunden ist, um das erste Mittel (13) in einer Richtung quer zur Drehungsachse (9) zwischen der Spiellage und der Bereitschaftslage zu bewegen.

5. Anordnung nach Anspruch 4, dadurch gekennzeichnet, daß das federnde Element (39) mit dem zweiten Mittel (19; 21) und der Lagerhülse (35) eine Einheit bildet.

6. Anordnung nach Anspruch 4 oder 5, dadurch gekennzeichnet, daß die Bedienungsvorrichtung (87) ein elektromagnetisches oder piezoelektrisches Bedienungsglied zum Andrücken der Lagerhülse (35) an einen Anschlag (95) des Positioniermittels in der Spiellage oder in der Bereitschaftslage enthält.

7. Anordnung nach Anspruch 1, 2 oder 3, dadurch gekennzeichnet, daß das zweite Mittel (19; 21; 119; 121) die Form einer halbzylindrischen Fläche (23; 123) annimmt, die mittels des federnden Scharniers (39; 140) am Gestell befestigt ist, um die halbzylindrische Fläche (23; 123) um die Schwenkachse zu schwenken.

8. Anordnung nach Anspruch 7, dadurch gekennzeichnet, daß die Bedienungsvorrichtung (87; 187) ein elektromagnetisches oder piezoelektrisches Bedienungsglied zum Andrücken der zylindrischen Fläche (23; 123) an einen Anschlag (95) des Positioniermittels in der Spiellage oder in der Bereitschaftslage enthält.

## Revendications

1. Dispositif (3) pour l'enregistrement et/ou la lecture magnétique de signaux dans des pistes de signaux sur une bande magnétique, comprenant un arbre d'entraînement (11) qui peut tourner autour d'un axe de rotation (9; 109), un premier moyen (13; 113) qui est fixé à l'arbre d'entraînement (11) et qui porte au moins une tête magnétique (15; 115) pouvant tourner avec ledit premier moyen (13; 113) autour de l'axe de rotation dans un trajet circulaire, et un élément de montage (17) portant un second moyen (19, 21; 119, 121) comprenant une surface de guidage cylindrique externe (23; 123) dont l'axe de cylindre s'étend parallèlement à l'axe de rotation, afin de guider la bande magnétique en regard de la tête magnétique (15; 115), un dispositif d'actionnement (87; 187) au moyen duquel un desdits moyens (13; 119; 121) peut pivoter par rapport à l'autre moyen (19; 21; 113), entre une position d'attente, dans laquelle la tête magnétique (15; 115) n'est pas en contact avec la bande magnétique qui est guidée par la surface de guidage (23; 123), et une position de lecture, dans laquelle la tête magnétique tournante est en contact avec la bande magnétique qui est guidée par la surface de guidage, le dispositif d'actionnement (87; 187) coopérant avec un moyen de positionnement (95) afin de positionner avec précision le moyen pouvant pivoter (13; 119; 121) dans au moins ladite position de lecture, caractérisé en ce que l'axe de pivotement autour duquel le dispositif d'actionnement (87; 187) fait pivoter le moyen pouvant pivoter (13; 119; 121) entre la position d'attente et la position de lecture est espacé de l'axe de rotation (9; 109) de l'arbre d'entraînement (11) et s'étend en substance parallèlement à celui-ci, l'axe de pivotement étant positionné par rapport à l'axe de rotation (9; 109) et à la surface de guidage (23; 123) d'une manière telle que dans la position d'attente, la tête magnétique (15; 115), lorsqu'elle tourne, n'entre pas en contact avec la bande magnétique.

2. Dispositif suivant la revendication 1, caractérisé en ce que le moyen pouvant pivoter (13; 119; 121) est supporté par un élément élastique (39; 140) qui constitue une charnière d'une pièce dont l'axe d'articulation coïncide avec l'axe de pivotement.

3. Dispositif suivant la revendication 2, caractérisé en ce que sous l'influence de l'élasticité de la charnière d'une pièce, le moyen pouvant pivoter (13; 119; 121) pivote à partir d'une première position vers une seconde position et est sollicité contre le moyen de positionnement (95) dans la seconde position.

4. Dispositif suivant la revendication 2 ou 3, caractérisé en ce que l'arbre d'entraînement (11) portant le premier moyen (13) tourillonne dans une douille-palier (35) coaxiale à l'axe de rotation (9) et reliée à l'élément de montage par l'élément élastique (39) pour déplacer le premier moyen (13) dans un sens transversal à l'axe de rotation (9) entre la position de lecture et la position d'attente.

5. Dispositif suivant la revendication 4, caractérisé en ce que l'élément élastique (39) est d'une pièce avec le second moyen (19; 21) et la douille-palier (35).

6. Dispositif suivant la revendication 4 ou 5, caractérisé en ce que le dispositif d'actionnement (87) comprend un actionneur électromagnétique ou piézoélectrique pour presser la douille-palier (35) contre un arrêt (95) du moyen de positionnement dans la position de lecture ou dans la position d'attente.

7. Dispositif suivant la revendication 1, 2 ou 3, caractérisé en ce que le second moyen (19, 21; 119, 121) prend la forme d'une surface semi-cylindrique (23; 123) qui est fixée à l'élément de montage à l'aide de la charnière élastique (39; 140) afin de faire pivoter la surface semi-cylindrique (23; 123) autour de l'axe de pivotement.

8. Dispositif suivant la revendication 7, caractérisé en ce que le dispositif d'actionnement (87; 187) comprend un actionneur électromagnétique ou piézoélectrique pour presser la surface cylindrique (23; 123) contre un arrêt (95) du moyen de positionnement dans la position de lecture ou dans la position d'attente.

FIG.1

FIG.2

FIG.3

FIG.4

FIG.5

FIG.6